(19) Europäisches Patentamt
European Patent Office
Office européen des brevets

(11) EP 4 586 118 A1

(12) EUROPEAN PATENT APPLICATION

(43) Date of publication:
**16.07.2025 Bulletin 2025/29**

(21) Application number: **25150900.6**

(22) Date of filing: **09.01.2025**

(51) International Patent Classification (IPC):
***G06F 21/55*** *(2013.01)* ***G06F 21/57*** *(2013.01)*
***G06F 21/14*** *(2013.01)* ***G06N 3/092*** *(2023.01)*

(52) Cooperative Patent Classification (CPC):
**G06F 21/556; G06F 21/14; G06F 21/577; G06N 3/092;** G06F 2221/033

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.01.2024 US 202418407685**

(71) Applicant: **Deutsche Telekom AG**
**53113 Bonn (DE)**

(72) Inventors:
- **FINKMAN, Amit**
**3486150 Haifa (IL)**
- **BAR-KOCHVA, Eden**
**8453125 Beer Sheva (IL)**
- **SHAPIRA, Avishag**
**8463713 Beer Sheva (IL)**
- **MIMRAN, David**
**6215505 Tel Aviv (IL)**
- **SHABTAI, Asaf**
**7684200, Hulda (IL)**
- **ELOVICI, Yuval**
**7986400 Arugot (IL)**
- **BRODT, Oleg**
**8471621 Beer Sheva (IL)**
- **LEHMAN, Heiko**
**12587 Berlin (DE)**

(74) Representative: **Graf von Stosch Patentanwaltsgesellschaft mbH**
**Prinzregentenstraße 22**
**80538 München (DE)**

(54) **A METHOD FOR EVALUATING AND MITIGATING CODE LEAKAGE BY LLM-BASED CODE ASSISTANTS**

(57) A method for real-time evaluating code leakage during software code development when the developer is using a code assistant tool, comprising performing code leakage estimation by identifying and processing, using an LLM-based model, the most updated code segments as the segments evolve; and evaluating, using the LLM-based model, the extent to which a written code has been inadvertently revealed to one or more code assistant servers by reconstructing the original code from the requests sent to each code assistant server. A method for real-time mitigating code leakage during software code development process when the developer is using a code assistant tool, comprising mitigating code leakage during code writing process by manipulating, using an RL agent, prompts and data being sent to a code assistant service provided by one or more code assistant servers.

EP 4 586 118 A1

## Description

### Field of the Invention

The present invention relates to the field of cyber security. More particularly, the invention relates to a method for evaluating and mitigating code leakage by LLM-based code assistants.

### Background of the Invention

The use of Large Language Models (LLMs), deep learning algorithms that can perform a variety of natural language processing tasks, is increasing. In addition, LLMs use transformer models and are trained using massive datasets for code generation is growing and becoming increasingly useful to the global community [19]. The efficiency of these models has been demonstrated in a number of studies [2]. Code assistance tools (Artificial Intelligence (AI)-powered tools designed to assist developers in writing code), such as GitHub Copilot (a cloud-based AI tool developed by GitHub and OpenAI to assist users of Visual Studio Code) and Code Llama (an LLM that can use text prompts to generate and discuss code) leverage advanced LLMs to provide real-time suggestions, thereby improving developers' coding efficiency and reducing errors.

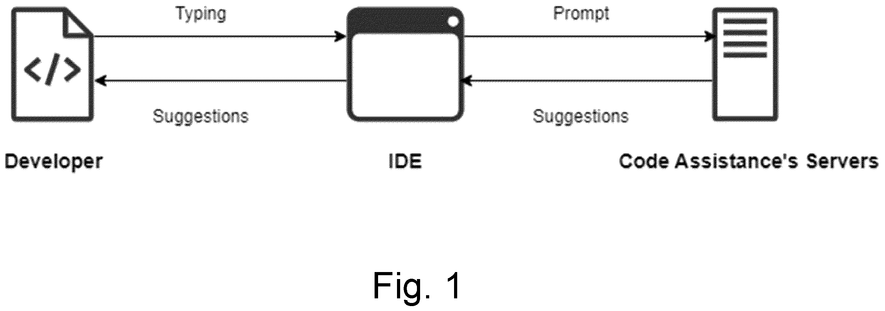

The flow of interaction with a code assistant server (that runs the code assistant service) is as follows. During the coding process (illustrated in Fig. 1), the code assistant server receives requests from different code assistance clients, executes the code assistant model, usually a machine learning/LLM model and returns the recommendations to the code assistant clients. At the first step, the developer is at work coding (or describing the desired functionality in free text) within an Integrated Development Environment (IDE - a software application that provides comprehensive facilities for software development). At the next step, the code assistant client (which is an agent/module installed within the user's IDE. It can collect code and information from the user's development environment and interacts with the code assistant server. The code assistant client is often a plug-in integrated within the IDE actively monitors the code being developed and gathers contextually relevant information, including the developer's recent interactions within the IDE and snippets of code (small blocks of reusable code that can be add to a code file) that may be relevant from other code sections and files, in order to obtain code suggestions. At the next step, based on the data gathered, the code assistant client generates a prompt that contains relevant information for obtaining useful suggestions and sends it to the code assistant server (also referred to as service/server that runs the code assistant LLM-based model). At the next step, the code assistant service generates suggestions about how the code can be completed by using LLMs and sends them back to the code assistant client within the IDE. These suggestions are presented to the developer via the IDE interface. When the developer finds suggestions suitable and relevant, they can be integrated into the code.

While LLMs have become invaluable in various tasks, their integration may inadvertently introduce security vulnerabilities and expose sensitive data. A notable threat is posed by membership inference attacks, which aim to determine whether specific data samples were part of a model's training set. Such attacks have been demonstrated on LLMs [1, 18]. In the context of LLM-based code assistants, privacy and security concerns increase, as the use of LLMs may introduce security vulnerabilities or unintentionally expose sensitive data (e.g., proprietary code).

The security risks introduced to LLM-based code assistants have been explored, while specifically investigating whether the use of LLMs could potentially compromise the security of the code assistant's code [5, 10, 14].

Also, the transmission of code snippets (prompts) to the code assistant model (service) may result in data leakage [13], potentially exposing the developer's code in its complete form.

The need for robust security measures to safeguard against these threats has become very important, as the role of LLM-based code assistants in software development has grown.

Previous approaches for file or codebase (a collection of source code used to build a particular software system, application, or software component) reconstruction from multiple code segments have been presented [16, 17]. These previous approaches did not address the dynamic nature of coding when using an LLM-based code assistant, and therefore, have limited ability to adapt to changes over time. As a result, there may be irrelevant or outdated segments in the final reconstructed code.

In machine learning (ML), data leakage can be mitigated by protecting a trained model from leaking sensitive data or by ensuring that a model is not trained on sensitive data in the first place [3, 4, 8, 11, 12, 15, 20, 21], or by concealing the data provided as input to a trained model [6].

In the context of LLM-based code assistants, existing techniques mainly focused on scenarios involving data used during the model's training phase. For instance, Ji *et al.* [7] presented techniques for applying lightweight transformations to a program before the program is released as open-source code. This prevents the model from being trained on the developer's code.

It is therefore an object of the present invention to provide a method for reconstructing code from snippets of code (prompts), sent as requests to the code assistant model, in order to evaluate the amount and quality of leaked code.

It is another object of the present invention to provide a real-time DRL model capable of mitigating and reducing the code leakage from LLM-based code assistants.

Other objects and advantages of the invention will become apparent as the description proceeds.

## Summary of the Invention

A method for real-time evaluating code leakage during software code development when the developer is using a code assistant tool, comprising performing code leakage estimation by:

a) identifying and processing, using an LLM-based model, the most updated code segments as the segments evolve; and
b) evaluating, using the LLM-based model, the extent to which a written code has been inadvertently revealed to one or more code assistant servers by reconstructing the original code from the requests sent to each code assistant server.

Codebase reconstruction for evaluating the code leakage is relevant in collaborative coding environments with simultaneous code edits by multiple developers.

A dataset containing authentic requests and responses generated by code assistant systems may be established.

The extent of codebase leakage during software development may be evaluated by:

a) intercepting and monitoring prompts being code segments that are sent to the code assistant service during the software development process;
b) formulating code reconstruction process, by a code reconstruction model capable of reconstructing the developer's codebase in which the prompts are aggregated over time, based on LLMs; and
c) evaluating the severity of the leakage, given the original and the reconstructed codebases.

Codebase leakage may be monitored by a Data Leakage Monitor that is adapted to:

a) monitor the traffic between the developer's environment and the code assistant server;
b) intercept the prompts that are being sent from a code assistant client to the code assistant server;
c) collect the code segments during the development process.

The code reconstruction model may identify lines of code segments and combines the code segments, to build a representation of the developer's final code and make assessment of code leakage.

The integrity and correctness of the reconstructed code during the development process may be maintained by:

a) extracting relevant portions of prompts sent to the code assistant server;
b) associating each code segment with its original context;
c) assembling the collected code segments; and
d) evaluating the amount of code leakage are.

The accuracy of the code reconstruction process is evaluated according to one or more of the following metrics:

- the Levenshtein distance;
- the Longest Common Subsequence;
- Code embedding distance.

Each prompt may comprise the name of the source file from which the code was extracted, to isolate and preserve the relevant portions of the prompts.

A method for real-time mitigating code leakage during software code development process when the developer is using a code assistant tool, comprising mitigating code leakage during code writing process by manipulating, using an RL agent, prompts and data being sent to a code assistant service provided by one or more code assistant servers.

ML may be used to iteratively make changes in the prompts, while minimizing the impact on the resulted suggestions.

Code leakage may be mitigated in collaborative coding environments with simultaneous code edits by multiple developers.

Codebase leakage may be monitored and mitigated in real-time by placing a proxy between the developer's environment and the code assistant service, or by using a plug-in or imitate the code assistant client's functionality.

Code leakage may be mitigated by:

a) for a given original source code, activating a Reinforcement Learning (RL) agent (for example Deep Reinforcement Learning - DRL) that learns which manipulations should be performed and in which order, so as to maximally manipulating the original source code, such that the manipulated source code is different from the original code;
b) examining, by the DRL agent, the suggestions that are based on the manipulated code and are provided by the code assistant service,
c) Ensuring that the suggestions are as similar as possible to suggestions that would have been suggested, based on the original source code; and
d) reducing code leakage by transforming sequence of manipulations applied to the original source code into sequential decision-making process that is being implemented using the DRL agent.

A reward function may be assigned, such that a higher reward to manipulations that effectively change a significant portion of the prompts, while simultaneously producing suggestions that are similar to those that would be produced for the original prompts.

A dataset of prompts from various projects to the DRL agent may be input, where during the DRL agent's training, the DRL agent processes the prompts and iteratively selects an action to apply to each prompt until the "stop manipulation" action is selected.

The effectiveness of the DRL agent's manipulations during the training process may be assessed by:

a) allowing the DRL agent to interact with the code assistant model and receive the code suggestions by sending the manipulated prompts to the code assistant model;
b) measuring by the DRL agent, the similarity between the suggestions received for the original and the manipulated prompts;
c) calculating the required *Reward* by the learning algorithm, to train the DRL agent.

Code leakage mitigation may be performed by:

a) placing a DRL agent between the developer's environment (e.g., IDE) and the code assistant service;
b) training the DRL agent to manipulate the prompts before they are sent such that for different prompts, the DRL agent is adapted to learn which changes to apply, and in which order.

The training of the DRL agent may be performed according to a policy that defines the preferred balance between preserving privacy and preserving the original code suggestions made by the code assistant model.

The method may further comprise the steps of:

a) applying a Code Translation Component to the returning suggestions of the code assistant server before sending it back to the developer's environment;
b) mapping, by the Code Translation Component, the names of the functions/variables to the original names.

The agent may be a Reinforcement Learning (DRL) agent.

Changes applied by the DRL agent may be selected from a group of actions, such as:

- deleting or inserting lines;
- removing the functions' body;
- changing names of variables or functions;
- summarizing a function code in natural language.

The DRL agent may be a single model or a combination of hierarchical models.

The DRL agent may be a master agent determining the type of change to be applied and a dedicated agent applying the change in the most optimal way.

A code segment may be used to apply the change and what will be the parameters of the change.

A state may include the information regarding the entire prompt.

Whenever a state represents only part/segment of the prompt, the RL agent may be adapted to apply the manipulation on the current part of the prompt by considering the changes made to the previous parts of the prompt.

## Brief Description of the Drawings

The above and other characteristics and advantages of the invention will be better understood through the following illustrative and non-limitative detailed description of preferred embodiments thereof, with reference to the appended drawings, wherein:

- Fig. 1 illustrates the flow of interaction with an ML-based code assistant server during the coding process;
- Fig. 2. Illustrates the proposed reconstruction method that employs an LLM, which serves as the Code Reconstruction Model;
- Fig. 3 illustrates the process of training a DRL agent to be capable of manipulating the prompts in an optimal manner; and
- Fig. 4 illustrates the interactions with the trained DRL agent.

## Detailed Description of the Present Invention

The present invention provides a method for evaluating and mitigating code leakage by LLM-based code assistants. After evaluation, the code leakage may be mitigated during the code writing (the development stage) process by manipulating the prompts and data sent to the code assistant service (model).

The first embodiment of the present invention proposes an approach for code leakage estimation that allows real-time dynamic content tracking and reconstruction by identifying and processing the most updated segments as they evolve. This capability is not only relevant for real-time evaluation of code leakage. It may also be useful in collaborative coding environments, where simultaneous code edits by multiple developers require a dynamic reconstruction approach. A unique dataset is established, which contains authentic requests/prompts and suggestions generated by code assistant systems.

As there are various privacy risks associated with the use of LLM-based code assistant systems, the method of the present invention evaluates the code leakage by evaluating the extent to which a developer's code has been inadvertently revealed to code assistant servers. In order to do so, the proposed method reconstructs the original code from the requests sent to the code assistant server.

The main challenge is reconstructing code that is leaked over time as prompts stems from the frequent code modifications made by the developer during coding, such as editing and deleting existing code segments. Because of such modifications, early segments captured may be irrelevant and outdated, thereby preventing the use of traditional reconstruction methods that combine all available segments into one complete code block.

The leakage is monitored by a Data Leakage Monitor that collects the code segments during the development process, intercepts and monitors the traffic between the IDE and the code assistant server and captures the prompts that are being sent from the code assistant client to the server.

This process is performed in real-time, for example, by placing a proxy (such as Burp Suite [9]) between the IDE and the code assistant service (model). When using a code assistant tool (an entire framework that includes the code assistant client within the IDE, the code assistant server and the model), developers can either start a new project from scratch or modify an existing code file or project.

The proposed method evaluates the extent of codebase leakage during the development process. In order to do so, three tasks must be performed: (1) determine an effective method for intercepting and monitoring prompts (code segments) sent to the code assistant service during the development process; (2) formulate a code reconstruction approach capable of reconstructing the developer's codebase, based on LLMs, in which the prompts are aggregated over time; (3) define a method for evaluating the severity of the leakage, given the original and reconstructed codebases.

In the second embodiment of the invention, in order to mitigate code leakage, the proposed novel method (called ChaMelonDRL) is based on a Reinforcement Learning, for example, Deep Reinforcement Learning (DRL - combines artificial neural networks with a framework of reinforcement learning that helps software agents learn how to reach their goals. It unites function approximation and target optimization, mapping states and actions to the rewards they lead to) agent which is aimed at reducing code leakage. Given a source code, the DRL agent learns both which manipulations should be performed and in which order they should be performed, in order to fulfill the objectives of maximally manipulating the source code such that it is different from the original code, and at the same time, the DRL agent ensures that the suggestions provided by the code assistant service based on the manipulated code are as similar as possible to the suggestions that would have been suggested, based on the original source code. The sequence of manipulations applied on the source code is transformed into sequential decision-making process that is implemented using the DRL agent.

### Code Reconstruction Model

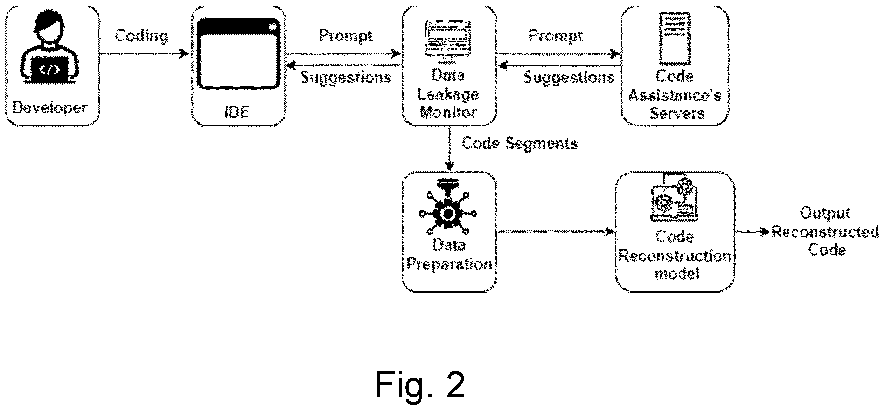

The proposed reconstruction method employs an LLM, which serves as the Code Reconstruction Model, as shown in Fig. 2. Based on prompts collected in the order in which they were transmitted from the code assistant client (in the IDE) to the code assistant service, the code reconstruction model intelligently identifies the relevant lines of code segments and then combines these code segments, to build a representation of the developer's final code and performing the assessment of code leakage. In the initial phase, the proposed method performs a preparatory process (using a Data Preparation Module), which is focused on extracting relevant parts of the prompts (for example, removing duplicated prompts or prompts that are contained within other prompts). These prompts, which are sent to the code assistant server, often contain extraneous details, so the proposed method isolates and preserves the relevant portions of the prompts (i.e., the code segments). Optionally, each prompt includes the name of the source file from which the code was extracted. This information is crucial in this option, as it allows the proposed reconstruction method to accurately associate each code segment with its original context, thereby maintaining the integrity of the code.

When these prompts are submitted to the model, they are accompanied by detailed and carefully specified instructions that clearly define the task. This is done to ensure that the model produces a relevant and accurate output, consisting of the name and content of each file identified, to provide a comprehensive view of the leaked code.

After assembling the collected code segments, at the next step, the effectiveness of the code reconstruction process and the amount of code leakage are evaluated. This involves assessing whether the proposed method accurately reconstructed the code in its original form and whether the reconstructed version clearly conveys the original intent and functionality of the code. This evaluation process allows the proposed method to accurately determine the percentage of the developer's code that was leaked and successfully reconstructed. A number of appropriate metrics can be used to evaluate the accuracy of the code reconstruction process, including metrics such as the edit distance (the minimum-weight series of edit operations that transforms a string into another string), the Levenshtein distance (the minimum number of single-character edits (insertions, deletions or substitutions) required to change one word into the other), a Longest Common Subsequence (LCS - the longest subsequence common to all sequences in a set of sequences) and code embedding distance.

Mitigation Model

In order to provide relevant suggestions regarding how to continue coding, code assistant services rely on developers (via the local code assistant client) to provide the code they are currently working on, as well as additional contextual data. The proposed code leakage mitigation method minimizes code leakage, particularly between the code assistant clients and the servers, during the developing process. Mitigation involves achieving two seemingly contradictory goals: (1) to expose as little information as possible about the developer's codebase and limit the leakage (2) to ensure that the code assistant server (model) continues to provide relevant suggestions.

To manipulate prompts in a way that optimizes and achieves the best balance between these two goals, we propose a reinforcement learning (RL), for example deep reinforcement learning (DRL) agent.

In order to achieve code leakage mitigation, a DRL agent is placed between the IDE and the code assistant service and is trained to manipulate the prompts before they are sent. This allows the developers to interact with the code assistant model (the machine learning model itself that can receive code and text as input, and return recommended code completions) on a regular basis. The manipulated prompts are crafted to ensure that the code that is sent to the code assistant model (and potentially leaked) differs from the original code, both visually and functionally, but yet aims to retain the original suggestions as closely as possible.

The DRL agent is tasked with learning how to apply a sequence of changes to the prompts that are sent to the code assistant service. For different prompts, the DRL agent learns which changes to apply and in which order they should be applied in order to effectively achieve the goals. The changes applied by the DRL agent may include, for example, deleting or inserting lines, removing the functions' body (a compound statement containing the statements that specify what the function does.), changing names of variables or functions, and summarizing a function code in natural language.

The DRL agent can be a single model or a combination of hierarchical models. This could involve, for instance, a master agent determining the type of change to be applied and a dedicated agent applying the change in the most optimal way (e.g., on which code segment to apply the change and what will be the parameters of the change).

The components of the DRL are described below:

The state representations contain information regarding the prompt and the changes applied to it. For a given prompt, the state representation can be:

$$\mathbf{S}_{\text{code}} = [C_1, C_2, ., C_K, O, M] \quad \text{(Eq. 1)}$$

where:

- $C_i$ represents the changes that were applied to the prompt so far.
- $O$ represents the original prompt (for example, an embedding vector of the prompt (a vector that can be generated using different ML models, specifically ML models that were trained on code segments (e.g., CodeT5), that can take as input a code segment and output a numeric vector representation of the code. In some models the numeric vector representation can be extracted from the internal layers of the model), or a list of expert-based features (hand-crafted features defined by experts to represent code, for example, number of lines, number of functions in the code, entropy of function names and variables, types of variables, capabilities in the code).

- *M* represents the manipulated prompt (for example, an embedding vector of the prompt (a vector that can be generated using different ML models, specifically ML models that were trained on code segments (e.g., CodeT5), that can take as input a code segment and output a numeric vector representation of the code. In some models the numeric vector representation can be extracted from the internal layers of the model), or a list of expert-based features (hand-crafted features defined by experts to represent code, for example, number of lines, number of functions in the code, entropy of function names and variables, types of variables, capabilities in the code).

A State representation can include the information regarding the complete/whole prompt (and then the RL agent will apply the selected manipulation on all of the prompt at once), or it can represent only part/segment of the prompt (for example, if the prompt is too large) and then the RL agent will apply the manipulation on the current part of the prompt (optionally, by considering the changes made to the previous parts of the prompt).

A state includes the information regarding the complete/whole prompt. Whenever a state represents only part/segment of the prompt, the RL agent will apply the manipulation on the current part of the prompt by considering the changes made to the previous parts of the prompt.

After performing an action in a particular state, the environment provides a reward to the agent. The reward indicates how good or bad the action was, in terms of achieving the agent's goal.

In order to evaluate the effectiveness of a selected action, multiple metrics that measure similarity between code segments are used, both visually and functionally. An example of a relevant similarity metric is the edit distance metric, which examines visual similarity between two segments of text. Another example is the cosine similarity metric, applied to the embedding vector that represents the code segments to be compared.

The proposed method minimizes the similarity (maximizing the distance) between the original and the manipulated prompts, thereby reducing leakage, while at the same time, maximizing the similarity (minimizing the distance) in the suggestions provided for the two prompts, thereby preserving the original and relevant suggestions. An example of a reward function is as follows:

$$\text{Reward} = L(r,r') - L(s,s') \qquad \text{(Eq. 2)}$$

where:

- $L(r,r')$ represents the loss (distance) between the original prompt (r) and the manipulated prompt (r') - higher distance is better.
- $L(s,s\ )$ represents the loss (distance) between the suggestion of the code assistant model when the original prompt was sent and the suggestion of the code assistant model when the manipulated prompt was sent.

This way, for each action (manipulation), the reward function assigns a higher reward to manipulations that effectively change a significant portion of the prompts, while simultaneously producing suggestions that are similar to those that would be produced for the original prompts.

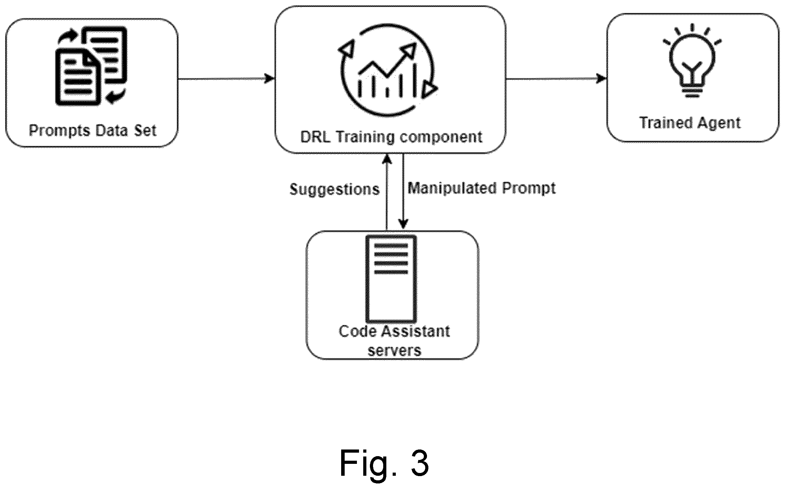

In order to produce an efficient agent that is capable of manipulating the prompts in an optimal manner, a DRL algorithm is used to train the agent (as shown in Fig. 3).

Optionally, the input to the DRL agent is a dataset of prompts from various projects, all generated by the code assistant client. During the DRL agent's training, the DRL agent processes the prompts and iteratively selects an action to apply to each prompt until the "stop manipulation" action is selected.

To assess the effectiveness of the DRL agent's manipulations during the training process, the DRL agent interacts with the code assistant model and receives the code suggestions by sending the manipulated and the original prompts to the code assistant model. This allows the agent to measure the similarity between the suggestions received for the original and the manipulated prompts, and to calculate the required *Reward* by the learning algorithm, to train the DRL agent.

The output of this phase is a trained DRL agent capable of effectively manipulating code prompts sent to an ML-based code assistant models in a way that preserves the privacy of the code owner, and the effectiveness/relevance of the code assistant model's suggestions. The trained DRL agent is used to successfully manipulate unseen or complex prompts during the operational inference phase.

The training of the DRL agent is performed according to a policy that defines the preferred balance between preserving privacy (i.e., preventing sensitive code leakage) and preserving the original code suggestions made by the code assistant model.

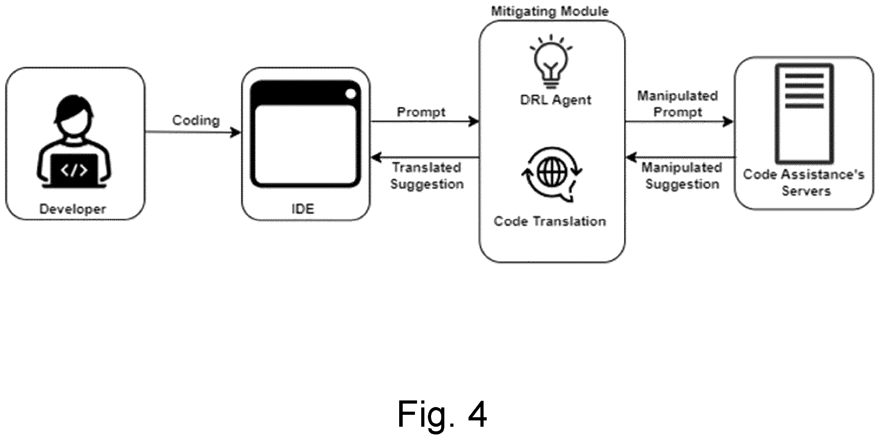

Following the training phase, the Mitigating Module, which includes the DRL agent, is placed between the IDE and the code assistant server, as shown in Fig. 4. This can be implemented, for example, by using a proxy or a plugin installed within the developer's IDE.

During coding, each prompt that is sent from the developer's IDE to the code assistant server is processed first by the DRL agent. The agent manipulates the prompt, while minimizing the leakage while preserving the suggestion's relevance, and sends the manipulated prompts to the code assistant server.

In some cases, an additional Code Translation Component (which is part of the Mitigating Module) is applied to the returning suggestions of the code assistant server before sending it back to the developer's IDE. For example, in cases where the DRL agent changes the names of functions/variables in the prompts before sending them to the code assistant client, the Code Translation Component maps the names of the functions/variables to the original names, so they will be aligned with the developer's code.

According to another embodiment, the system may be adapted to prioritize the mitigation of the leakage over receiving relevant suggestions and vice versa.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the claims.

## References

[1] Nicholas Carlini, Florian Tramer, Eric Wallace, Matthew Jagielski, Ariel Herbert-Voss, Katherine Lee, Adam Roberts, Tom Brown, Dawn Song, Ulfar Erlingsson, et al. Extracting training data from large language models. In 30th USENIX Security Symposium (USENIX Security 21), pages 2633-2650, 2021.

[2] Yupeng Chang, Xu Wang, Jindong Wang, Yuan Wu, Kaijie Zhu, Hao Chen, Linyi Yang, Xiaoyuan Yi, Cunxiang Wang, Yidong Wang, et al. A survey on evaluation of large language models. arXiv preprint arXiv:2307.03109, 2023.

[3] Sanjam Garg, Shafi Goldwasser, and Prashant Nalini Va- sudevan. Formalizing data deletion in the context of the right to be forgotten. In Annual International Conference on the Theory and Applications of Cryptographic Techniques, pages 373-402. Springer, 2020.

[4] Hrayr Harutyunyan, Alessandro Achille, Giovanni Paolini, Orchid Majumder, Avinash Ravichandran, Rahul Bhotika, and Stefano Soatto. Estimating informativeness of sam- ples with smooth unique information. arXiv preprint arXiv:2101.06640, 2021.

[5] Huseyin A Inan, Osman Ramadan, Lukas Wutschitz, Daniel Jones, Victor Ruhle, James Withers, and Robert Sim. Training data leakage analysis in language models. arXiv preprint arXiv:2101.05405, 2021.

[6] Marija Jegorova, Chaitanya Kaul, Charlie Mayor, Alison Q O'Neil, Alexander Weir, Roderick Murray-Smith, and Sotirios A Tsaftaris. Survey: Leakage and privacy at inference time. IEEE Transactions on Pattern Analysis and Machine Intelligence, 2022.

[7] Zhenlan Ji, Pingchuan Ma, and Shuai Wang. Unlearnable examples: Protecting open-source software from unauthorized neural code learning. In SEKE, pages 525-530, 2022.

[8] Jinyuan Jia, Ahmed Salem, Michael Backes, Yang Zhang, and Neil Zhenqiang Gong. Memguard: Defending against black-box membership inference attacks via adversarial examples. In Proceedings of the 2019 ACM SIGSAC conference on computer and communications security, pages 259-274, 2019.

[9] Wang Junmei and Yan Chengkang. Automation testing of software security based on burpsuite. In 2021 International Conference of Social Computing and Digital Economy (IC-SCDE), pages 71-74. IEEE, 2021.

[10] Rapha el Khoury, Anderson R Avila, Jacob Brunelle, and Baba Mamadou Camara. How secure is code generated by chatgpt? arXiv preprint arXiv:2304.09655, 2023.

[11] Klas Leino and Matt Fredrikson. Stolen memories: Leverag- ing model memorization for calibrated {White-Box} mem- bership inference. In 29th USENIX security symposium (USENIX Security 20), pages 1605-1622, 2020.

[12] Jiacheng Li, Ninghui Li, and Bruno Ribeiro. Membership inference attacks and defenses in classification models. In Proceedings of the Eleventh ACM Conference on Data and Application Security and Privacy, pages 5-16, 2021.

[13] Liang Niu, Shujaat Mirza, Zayd Maradni, and Christina Popper. Codexleaks: Privacy leaks from code generation language models in github copilot. In 32nd USENIX Security Symposium (USENIX Security 23). USENIX Association, 2023.

[14] Neil Perry, Megha Srivastava, Deepak Kumar, and Dan Boneh. Do users write more insecure code with AI assistants arXiv preprint arXiv:2211.03622, 2022.

[15] Ahmed Salem, Yang Zhang, Mathias Humbert, Pascal Berrang, Mario Fritz, and Michael Backes. Ml-leaks: Model

and data independent membership inference attacks and defenses on machine learning models. arXiv preprint arXiv:1806.01246, 2018.
[16] Christian Schauer, Matthias Prandtstetter, and G¨ unther R Raidl. A memetic algorithm for reconstructing cross-cut shredded text documents. In International Workshop on Hy- brid Metaheuristics, pages 103-117. Springer, 2010.
[17] Kulesh Shanmugasundaram and Nasir Memon. Automatic reassembly of document fragments via data compression. In 2nd Digital Forensics Research Workshop, Syracuse, 2002.
[18] Zhensu Sun, Xiaoning Du, Fu Song, Mingze Ni, and Li Li. Coprotector: Protect open-source code against unauthorized training usage with data poisoning. In Proceedings of the ACM Web Conference 2022, pages 652-660, 2022.
[19] Priyan Vaithilingam, Tianyi Zhang, and Elena L Glassman. Expectation vs. experience: Evaluating the usability of code generation tools powered by large language models. In Chi conference on human factors in computing systems extended abstracts, pages 1-7, 2022.
[20] Qiang Yang, Yang Liu, Tianjian Chen, and Yongxin Tong. Federated machine learning: Concept and applications. ACM Transactions on Intelligent Systems and Technology (TIST), 10(2):1-19, 2019.
[21] Yu Yin, Ke Chen, Lidan Shou, and Gang Chen. Defending privacy against more knowledgeable membership inference attackers. In Proceedings of the 27th ACM SIGKDD Confer- ence on Knowledge Discovery & Data Mining, pages 2026- 2036, 2021.

## Claims

**1.** A method for real-time evaluating code leakage during software code development when the developer is using a code assistant tool, comprising performing code leakage estimation by:

a) identifying and processing, using an LLM-based model being executed at least one code assistant server, the most updated code segments as said segments evolve; and
b) evaluating, using said LLM-based model, the extent to which a written code has been inadvertently revealed to one or more code assistant servers by reconstructing the original code from the requests sent to each code assistant server,

said code assistant tool being a framework that includes:

- a code assistant client running within an Integrated Development Environment (IDE);
- said code assistant server;
- said LLM-based model.

**2.** A method according to claim 1, further comprising establishing a dataset containing authentic requests and responses generated by code assistant systems.

**3.** A method according to claim 1, wherein the extent of codebase leakage during software development is evaluated by:

a) intercepting and monitoring prompts being code segments that are sent to the code assistant service, provided by one or more code assistant servers, during the software development process;
b) formulating code reconstruction process, by a code reconstruction model capable of reconstructing the developer's codebase in which the prompts are aggregated over time, based on LLMs; and
c) evaluating the severity of the leakage, given the original and the reconstructed codebases.

**4.** A method according to claim 3, wherein codebase leakage is monitored by a Data Leakage Monitor that is adapted to:

a) monitor the traffic between the developer's environment and the code assistant server;
b) intercept the prompts that are being sent from a code assistant client to said code assistant server; and
c) collect the code segments during the development process.

**5.** A method according to claim 2, wherein the integrity and correctness of the reconstructed code during the development process is maintained by:

a) extracting relevant portions of prompts sent to the code assistant server;
b) associating each code segment with its original context;

c) assembling the collected code segments; and
d) evaluating the amount of code leakage are.

**6.** A method according to claim 1, wherein the accuracy of the code reconstruction process is evaluated according to one or more of the following metrics:

- the Levenshtein distance;
- the Longest Common Subsequence;
- Code embedding distance.

**7.** A method for real-time mitigating code leakage during software code development process when the developer is using a code assistant tool, comprising mitigating code leakage during code writing process by manipulating, using an RL agent, prompts and data being sent to a code assistant service provided by one or more code assistant servers.

**8.** A method according to claim 7, wherein code leakage is monitored and mitigated in real-time by placing a proxy between the developer's environment and the code assistant service, provided by one or more code assistant servers, or by using a plug-in or imitate the code assistant client's functionality.

**9.** A method according to claim 7, wherein code leakage is mitigated by:

a) for a given original source code, activating a Reinforcement Learning (RL) agent that learns which manipulations should be performed and in which order, so as to maximally manipulating the original source code, such that the manipulated source code is different from said original code;
b) examining, by said DRL agent, the suggestions that are based on the manipulated code and are provided by the code assistant service provided by one or more code assistant servers;
c) ensuring that said suggestions are as similar as possible to suggestions that would have been suggested, based on the original source code; and
d) reducing code leakage by transforming sequence of manipulations applied to said original source code into sequential decision-making process that is being implemented using said DRL agent.

**10.** A method according to claim 9, further comprising assigning by a reward function, a higher reward to manipulations that effectively change a significant portion of the prompts, while simultaneously producing suggestions that are similar to those that would be produced for the original prompts.

**11.** A method according to claim 9, further comprising inputting a dataset of prompts from various projects to the DRL agent, where during the DRL agent's training, said DRL agent processes said prompts and iteratively selects an action to apply to each prompt until the "stop manipulation" action is selected.

**12.** A method according to claim 9, wherein the effectiveness of the DRL agent's manipulations during the training process is assessed by:

a) allowing the DRL agent to interact with the code assistant model and receive the code suggestions by sending the manipulated prompts to the code assistant model;
b) measuring by said DRL agent, the similarity between the suggestions received for the original and the manipulated prompts; and
c) calculating the required *Reward* by the learning algorithm, to train the DRL agent.

**13.** A method according to claim 9, wherein code leakage mitigation is performed by:

a) placing a DRL agent between the developer's environment and the code assistant service provided by one or more code assistant servers;
b) training said DRL agent to manipulate the prompts before they are sent such that for different prompts, said DRL agent is adapted to learn which changes to apply, and in which order.

**14.** A method according to claim 9, further comprising:

a) applying a Code Translation Component to the returning suggestions of the code assistant server before sending it back to the developer's environment;

b) mapping, by said Code Translation Component, the names of the functions/variables to the original names.

**15.** A method according to claim 9, wherein the agent is a Deep Reinforcement Learning (DRL) agent.

**16.** A method according to claim 9, wherein the changes applied by the DRL agent are selected from a group of actions, such as:

- deleting or inserting lines;
- removing the functions' body;
- changing names of variables or functions;
- summarizing a function code in natural language.

**17.** A method according to claim 9, wherein the DRL agent is a single model or a combination of hierarchical models or a master agent determining the type of change to be applied and a dedicated agent applying the change in the most optimal way.

Developer
Typing
Suggestions
IDE
Prompt
Suggestions
Code Assistance's Servers

Fig. 1

Developer
Coding
IDE
Prompt
Suggestions
Data Leakage Monitor
Prompt
Suggestions
Code Assistance's Servers
Code Segments
Data Preparation
Code Reconstruction model
Output Reconstructed Code

Fig. 2

Prompts Data Set
DRL Training component
Trained Agent
Manipulated Prompt
Suggestions
Code Assistant servers

Fig. 3

Developer
Coding
IDE
Prompt
Translated Suggestion
Mitigating Module
DRL Agent
Code Translation
Manipulated Prompt
Manipulated Suggestion
Code Assistance's Servers

Fig. 4

# EUROPEAN SEARCH REPORT

Application Number
EP 25 15 0900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Weiss Dror: "Tabnine: The enterprise-grade AI code assistant", , 15 February 2023 (2023-02-15), pages 1-7, XP093255736, Retrieved from the Internet: URL:https://www.tabnine.com/blog/tabnine-the-enterprise-grade-ai-code-assistant/ * pages 2-4 * | 1-6 | INV. G06F21/55 G06F21/57 G06F21/14 G06N3/092 |
| A | SHANMUGASUNDARAM K ET AL: "Automatic reassembly of document fragments via context based statistical models", PROCEEDING OF THE 19TH ANNUAL COMPUTER SECURITY APPLICATIONS CONFERENCE (ACSAC 2003), PISCATAWAY, NJ, USA,IEEE, 8 December 2003 (2003-12-08), pages 152-159, XP010673770, DOI: 10.1109/CSAC.2003.1254320 ISBN: 978-0-7695-2041-4 * abstract * * 2.3. Our Approach, pages 4-5 * * 3.3. Experiments & Results, pages 6-7 * * table 1 * | 1-6 | TECHNICAL FIELDS SEARCHED (IPC) G06F G06N |
| A | VALENTIN HARTMANN ET AL: "SoK: Memorization in General-Purpose Large Language Models", ARXIV.ORG, CORNELL UNIVERSITY LIBRARY, 201 OLIN LIBRARY CORNELL UNIVERSITY ITHACA, NY 14853, 24 October 2023 (2023-10-24), XP091647054, * 4.2 Implications, page 7 * | 1-6 | |

-/--

The present search report has been drawn up for all claims

3

| Place of search | Date of completion of the search | Examiner |
|---|---|---|
| The Hague | 20 May 2025 | Segura, Gustavo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

# EUROPEAN SEARCH REPORT

Application Number
EP 25 15 0900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "ObfusCat: AI Code Assistant", , 7 November 2023 (2023-11-07), pages 1-5, XP093279350, Retrieved from the Internet: URL:https://web.archive.org/web/20231107015219/https://obfuscat.com/ | 7,8 | |
| A | * page 2, lines 1-14 * ----- | 9-17 | |
| A | XIANGRU TANG ET AL: "BioCoder: A Benchmark for Bioinformatics Code Generation with Contextual Pragmatic Knowledge", ARXIV.ORG, CORNELL UNIVERSITY LIBRARY, 201 OLIN LIBRARY CORNELL UNIVERSITY ITHACA, NY 14853, 29 September 2023 (2023-09-29), XP091627236, * N OBFUSCATION ABLATION STUDY, pages 65-67 * ----- | 7-17 | |

TECHNICAL FIELDS SEARCHED (IPC)

The present search report has been drawn up for all claims

3

| Place of search | Date of completion of the search | Examiner |
|---|---|---|
| The Hague | 20 May 2025 | Segura, Gustavo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

**Application Number**
EP 25 15 0900

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

# LACK OF UNITY OF INVENTION SHEET B

Application Number
EP 25 15 0900

The Search Division considers that the present European patent application does not comply with the requirements of unity of invention and relates to several inventions or groups of inventions, namely:

1. claims: 1-6

   evaluating code leakage

   ---

2. claims: 7-17

   mitigating code leakage

   ---

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **NICHOLAS CARLINI** ; **FLORIAN TRAMER** ; **ERIC WALLACE** ; **MATTHEW JAGIELSKI** ; **ARIEL HERBERT-VOSS** ; **KATHERINE LEE** ; **ADAM ROBERTS** ; **TOM BROWN** ; **DAWN SONG** ; **ULFAR ERLINGSSON et al.** Extracting training data from large language models. *30th USENIX Security Symposium (USENIX Security 21)*, 2021, 2633-2650
- **YUPENG CHANG** ; **XU WANG** ; **JINDONG WANG** ; **YUAN WU** ; **KAIJIE ZHU** ; **HAO CHEN** ; **LINYI YANG** ; **XIAOYUAN YI** ; **CUNXIANG WANG** ; **YIDONG WANG et al.** A survey on evaluation of large language models. *arXiv preprint arXiv:2307.03109*, 2023
- Formalizing data deletion in the context of the right to be forgotten. **SANJAM GARG** ; **SHAFI GOLDWASSER** ; **PRASHANT NALINI VA- SUDEVAN**. Annual International Conference on the Theory and Applications of Cryptographic Techniques. Springer, 2020, 373-402
- **HRAYR HARUTYUNYAN** ; **ALESSANDRO ACHILLE** ; **GIOVANNI PAOLINI** ; **ORCHID MAJUMDER** ; **AVINASH RAVICHANDRAN** ; **RAHUL BHOTIKA** ; **STEFANO SOATTO**. Estimating informativeness of sam- ples with smooth unique information. *arXiv preprint arXiv:2101.06640*, 2021
- **HUSEYIN A INAN** ; **OSMAN RAMADAN** ; **LUKAS WUTSCHITZ** ; **DANIEL JONES** ; **VICTOR RUHLE** ; **JAMES WITHERS** ; **ROBERT SIM.** Training data leakage analysis in language models. *arXiv preprint arXiv:2101.05405*, 2021
- **MARIJA JEGOROVA** ; **CHAITANYA KAUL** ; **CHARLIE MAYOR** ; **ALISON Q O'NEIL** ; **ALEXANDER WEIR** ; **RODERICK MURRAY-SMITH** ; **SOTIRIOS A TSAFTARIS**. Survey: Leakage and privacy at inference time. *IEEE Transactions on Pattern Analysis and Machine Intelligence*, 2022
- **ZHENLAN JI** ; **PINGCHUAN MA** ; **SHUAI WANG**. Unlearnable examples: Protecting open-source software from unauthorized neural code learning. *SEKE*, 2022, 525-530
- **JINYUAN JIA** ; **AHMED SALEM** ; **MICHAEL BACKES** ; **YANG ZHANG** ; **NEIL ZHENQIANG GONG**. Memguard: Defending against black-box membership inference attacks via adversarial examples. *Proceedings of the 2019 ACM SIGSAC conference on computer and communications security*, 2019, 259-274
- utomation testing of software security based on burpsuite. **WANG JUNMEI** ; **YAN CHENGKANG**. In 2021 International Conference of Social Computing and Digital Economy (IC-SCDE). IEEE, 2021, 71-74
- **RAPHA EL KHOURY** ; **ANDERSON R AVILA** ; **JACOB BRUNELLE** ; **BABA MAMADOU CAMARA**. How secure is code generated by chatgpt. *arXiv preprint arXiv:2304.09655*, 2023
- **KLAS LEINO** ; **MATT FREDRIKSON**. Stolen memories: Leverag- ing model memorization for calibrated {White-Box} mem- bership inference. *In 29th USENIX security symposium (USENIX Security 20)*, 2020, 1605-1622
- **JIACHENG LI** ; **NINGHUI LI** ; **BRUNO RIBEIRO**. Membership inference attacks and defenses in classification models. *In Proceedings of the Eleventh ACM Conference on Data and Application Security and Privacy*, 2021, 5-16
- odexleaks: Privacy leaks from code generation language models in github copilot. **LIANG NIU** ; **SHUJAAT MIRZA** ; **ZAYD MARADNI** ; **CHRISTINA POPPER**. In 32nd USENIX Security Symposium (USENIX Security 23). USENIX Association, 2023
- **NEIL PERRY** ; **MEGHA SRIVASTAVA** ; **DEEPAK KUMAR** ; **DAN BONEH**. Do users write more insecure code with AI assistants. *arXiv preprint arXiv:2211.03622*, 2022
- **AHMED SALEM** ; **YANG ZHANG** ; **MATHIAS HUMBERT** ; **PASCAL BERRANG** ; **MARIO FRITZ** ; **MICHAEL BACKES**. Ml-leaks: Model and data independent membership inference attacks and defenses on machine learning models. *arXiv preprint arXiv:1806.01246*, 2018
- A memetic algorithm for reconstructing cross-cut shredded text documents. **CHRISTIAN SCHAUER** ; **MATTHIAS PRANDTSTETTER** ; **G¨ UNTHER R RAIDL**. In International Workshop on Hy- brid Metaheuristics. Springer, 2010, 103-117
- **KULESH SHANMUGASUNDARAM** ; **NASIR MEMON**. Automatic reassembly of document fragments via data compression. *In 2nd Digital Forensics Research Workshop, Syracuse*, 2002
- **ZHENSU SUN** ; **XIAONING DU** ; **FU SONG** ; **MINGZE NI** ; **LI LI**. Coprotector: Protect open-source code against unauthorized training usage with data poisoning. *Proceedings of the ACM Web Conference 2022,*, 2022, 652-660

- **PRIYAN VAITHILINGAM** ; **TIANYI ZHANG** ; **ELENA L GLASSMAN**. Expectation vs. experience: Evaluating the usability of code generation tools powered by large language models. *In Chi conference on human factors in computing systems extended abstracts*, 2022, 1-7
- **QIANG YANG** ; **YANG LIU** ; **TIANJIAN CHEN** ; **YONGXIN TONG**. Federated machine learning: Concept and applications. *ACM Transactions on Intelligent Systems and Technology (TIST)*, 2019, vol. 10 (2), 1-19
- **YU YIN** ; **KE CHEN** ; **LIDAN SHOU** ; **GANG CHEN**. Defending privacy against more knowledgeable membership inference attackers. *In Proceedings of the 27th ACM SIGKDD Confer- ence on Knowledge Discovery & Data Mining*, 2021, 2026-2036